Europäisches Patentamt

European Patent Office

Office européen des brevets

(11) Numéro de publication: **0 182 705**
**B1**

(12) # FASCICULE DE BREVET EUROPÉEN

(45) Date de publication du fascicule du brevet:
04.01.89

(51) Int. Cl.⁴: **F 16 L  3/00**

(21) Numéro de dépôt: **85402176.3**

(22) Date de dépôt: **12.11.85**

(54) **Dispositif de transfert de fluide entre une structure fixe et une structure mobile en rotation utilisant au moins une conduite flexible.**

(30) Priorité: **12.11.84  FR 8417207**

(43) Date de publication de la demande:
**28.05.86 Bulletin 86/22**

(45) Mention de la délivrance du brevet:
**04.01.89 Bulletin 89/1**

(84) Etats contractants désignés:
**DE GB IT NL SE**

(56) Documents cité:
**US-A-3 602 302**
**US-A-4 436 048**

(73) Titulaire: **COFLEXIP, 23 Avenue de Neuilly, F-75116 Paris (FR)**

(72) Inventeur: **Carrio, Pierre, 164 bis, rue de l'Université, F-75007 Paris (FR)**

(74) Mandataire: **Nony, Michel, Cabinet Nony 29, rue Cambacérès, F-75008 Paris (FR)**

## Description

La présente invention est relative à un dispositif de transfert de fluide entre une structure fixe et une structure mobile en rotation, utilisant au moins une conduite ou câble flexible munie à chacune de ses extrémités de moyens de connexion aptes à coopérer avec des moyens de connexion correspondants disposés sur la structure fixe et la structure mobile, comprenant des moyens de stockage desdites conduites flexibles sur la structure mobile et sur la structure fixe, les moyens de connexion étant notamment du type à connexion et déconnexion rapides.

Les conduites flexibles suivant l'invention peuvent par exemple être des conduites tubulaires de production d'hydrocarbures, des lignes de commandes électriques ou hydrauliques pour des installations de forage et de production d'hydrocarbures à partir de puits sous-marins ou encore des lignes de type "kill and choke" permettant des interventions sur une tête de puits depuis la surface.

La structure mobile selon l'invention peut en particulier être un navire de forage ou de production muni d'un puits de type "moon-pool" à l'intérieur duquel est disposée une structure fixe au moins en partie cylindrique, telle qu'une tourelle (turret) ou une table liée par des lignes d'ancrage au fond sous-marin, ou immobilisée sous l'action de moyens de positionnement dynamique installés sur la structure mobile, la ou les conduites de transfert selon l'invention reliant la structure cylindrique fixe à la ou aux têtes de puits sous-marines. Généralement la structure cylindrique sous forme de tourelle comporte une plate-forme supérieure reposant par un roulement sur le pont du navire, celui-ci pouvant ainsi tourner par rapport à la tourelle selon les sollicitations du vent, de la houle et des courants.

La ou les lignes de transfert de fluide devant être fixées par une extrémité au navire constituant la structure mobile et par l'autre extrémité à la tourelle fixe autour de laquelle tourne le navire, des problèmes se posent pour assurer en toute sécurité la liaison de transfert de fluides, en particulier lors de rotations importantes, pouvant atteindre plusieurs tours dans le même sens, du navire par rapport à la tourelle.

Une solution envisagée consiste à mettre en place sur la tourelle un mécanisme à joint tournant (swivel-joint) au travers duquel passent les fluides transférés (par exemple US-A-4 436 048 ou US-A-3 602 302).

Compte-tenu notamment des pressions importantes que peuvent atteindre notamment les hydrocarbures lors de leur production, pressions couramment de 100 bars et plus, les mécanismes à joint tournant se sont révélés peu fiables et posent de nombreux problèmes, notamment d'étanchéité.

En outre, l'atmosphère gazeuse explosive régnant dans le joint tournant peut provoquer des accidents avec des conduites comportant des lignes électriques.

On a donc cherché des solutions permettant d'éviter l'emploi de joints tournants, ces solutions, compte-tenu des dimensions très importantes des structures concernées et des cinématiques complexes mises en oeuvre ayant abouti à des structures d'un coût très élevé et en outre, relativement difficiles à mettre en oeuvre.

La présente invention se propose de réaliser un dispositif qui tout en étant relativement simple et économique, permet d'assurer de façon fiable, le transfert de fluide sans utiliser de mécanisme à joints tournants.

Le dispositif suivant l'invention, se caractérise par le fait que pour guider la ou chacune des conduites flexibles au cours de leur déplacement de l'un desdites moyens de stockage vers l'autre une portée courbe d'appui est montée guidée sur la strucure fixe et/ou la structure mobile de manière à se déplacer concentriquement autour de ladite structure fixe au voisinage de la paroi latérale de celle-ci. La portée courbe est formée par un chemin de rouleaux ou une gouttière incurvée, ou constituée par la périphérie d'une gorge d'une roue comportant au moins une gorge, l'axe de la roue étant de préférence disposé radialement par rapport à la structure fixe et orthogonal à l'axe de cette structure fixe.

Dans le mode de réalisation où la portée courbe d'appui est réalisée sur une roue, celle-ci est de préférence montée folle, mais peut en variante être munie de moyens d'entraînement en rotation. En outre, la portée courbe d'appui est associée à de moyens moteurs d'entraînement agissant sur elle lors de son déplacement circulaire autour de la structure fixe, l'action des moyens d'entraînement s'effectuant dans un sens permettant d'exercer une tension sur la conduite appliquée sur la portée courbe d'appui correspondante.

Dans un premier mode de réalisation, la portée courbe d'appui peut être montée dans un bâti mobile, ce bâti dans une forme préférée de réalisation étant porté et guidé à sa partie inférieure sur un rail porté par la structure mobile et étant guidé à sa partie supérieure sur un rail porté par la partie supérieure de la structure fixe.

Dans un second mode de réalisation, la portée courbe d'appui peut être guidée dans une glissière périphérique réalisée dans la paroi latérale de la structure fixe.

Des moyens de stockage des conduites flexibles sont prévus sur la structure mobile et sur la structure fixe.

Ces moyens de stockage sur la structure mobile peuvent avantageusement être formés par un puits annulaire dans lequel les spires successives de la ou des conduites flexibles se disposent les unes au-dessus des autres verticalement.

Cette solution est la plus avantageuse mais naturellement en variante, les spires successives pourraient se disposer horizontalement sur un plancher de la structure mobile.

Les moyens de stockage sur la structure fixe comportent dans une première forme de réalisa-

tion, au moins une gorge s'ouvrant radialement vers l'extérieur de la paroi latérale de la structure fixe au voisinage de sa partie supérieure, les spires se disposant horizontalement dans la ou les gorges.

En variante, les moyens de stockage sur la structure fixe peuvent comprendre une gorge circonférentielle réalisée dans la structure fixe au voisinage de sa périphérie, gorge dans laquelle les spires successives s'engagent les unes au-dessus des autres verticalement.

Des moyens de guidage de conduites flexibles peuvent être prévus de préférence sur la portée courbe d'appui, des moyens de guidage pouvant également être prévus sur la structure fixe et/ou la structure mobile, pour faciliter le stockage et respectivement le déstockage de la ou des conduites.

Selon l'invention, il peut être prévu une portée courbe d'appui par conduite ou en variante un ensemble de portées courbes d'appui réalisées notamment sous forme d'une roue unique à plusieurs gorges périphériques peut être utilisé pour l'ensemble des conduites disposées en faisceau.

Dans le cas de conduites de production et pour permettre d'admettre un nombre important, à la limite infini, de rotations successives dans le même sens de la structure mobile par rapport à la structure fixe, il est prévu deux conduites associées chacune à une portée courbe d'appui, les deux conduites étant en permanence connectées soit à la structure fixe soit à la structure mobile, chacune des structures comportant des éléments de connecteur pour le raccordement des éléments de connecteurs portés par les conduites, la longueur de chaque conduite étant égale ou peu supérieure à une demi-circonférence de la structure fixe.

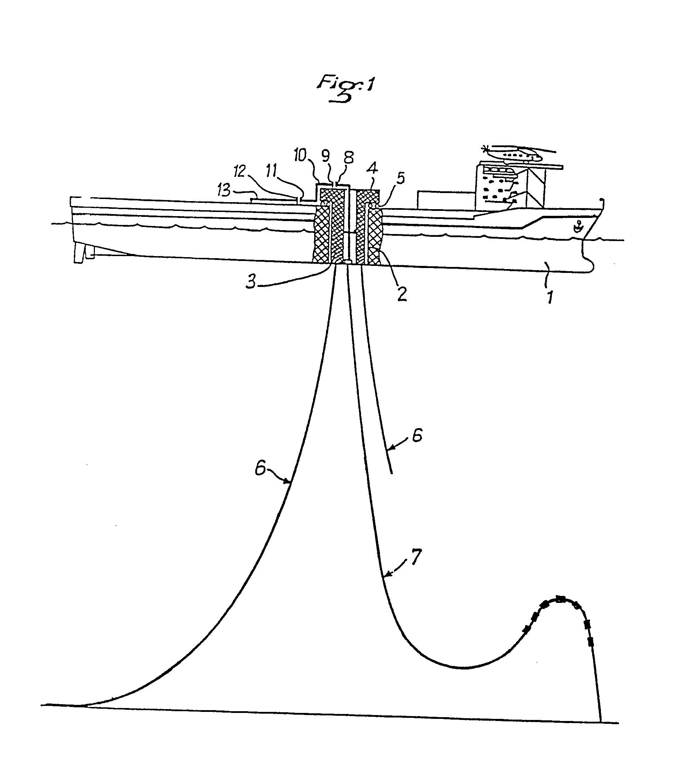

D'autres avantages et caractéristiques de l'invention apparaîtront à la lecture de la description suivante d'exemples de mise en oeuvre nullement limitatifs en se référant au dessin dans lequel:- la figure 1 illustre un naivre support de production en mettant en oeuvre le dispositif de transfert de fluide selon l'invention;

- la figure 2 est une vue schématique en plan et en demi-coupe d'un exemple de mise en oeuvre de dispositif selon l'invention;
- la figure 2a illustre une variante de réalisation de moyens de stockage du dispositif de la figure 2;
- la figure 3 est une vue schématique de dessus du dispositif de la figure 2.
- les figures 4a à 4d sont des schémas de principe illustrant différentes positions des composants du dispositif selon l'invention en cours de mise en oeuvre;
- les figures 5a à 5i sont des schémas de principe montrant différentes positions de dispositif selon l'invention dans un autre mode particulier de mise en oeuvre.

En se référant à la figure 1, on voit un navire support de production 1 comportant un puits appelé "moon-pool" 2 à l'intérieur duquel est disposée une tourelle, appelée habituellement "turret", de forme cylindrique 3 comportant à sa partie supérieure une plate-forme ou table 4 reposant sur un pont du navire par l'intermédiaire d'un roulement 5.

La tourelle 3 est maintenue fixe ou sensiblement fixe en étant amarrée au fond sous-marin par des lignes d'ancrage 6.

On a schématisé par 7 un ensemble de conduites flexibles de remontée d'hydrocarbures produits par des puits sous-marins et de télécommande. De telles conduites flexibles sont fabriquées et commercialisées en grande longueur par la société déposante. Dans ce qui suit, pour simplifier, on désignera sous le terme de conduite flexible un tel ensemble de conduites.

La conduite 7 traverse sur toute sa hauteur la tourelle 3 et la table 4 située son extrémité supérieure et comporte à son extrémité un élément de connecteur 8 apte à se raccorder à un élément de connecteur correspondant 9 d'une conduite tubulaire 10, munie à son autre extrémité d'un élément de connecteur 11 apte à se raccorder à un élément de connecteur 12 d'une conduite 13.

Les éléments de connecteur 8 et 9 d'une part, et 11 et 12 d'autre part, sont du type à connexion et déconnexion rapides, couramment utilisés dans l'industrie pétrolière.

Les hydrocarbures remontés par la conduite 7 passent ainsi par la conduite 10, puis par la conduite 13 pour remplir les cuves prévues à cet effet sur le navire.

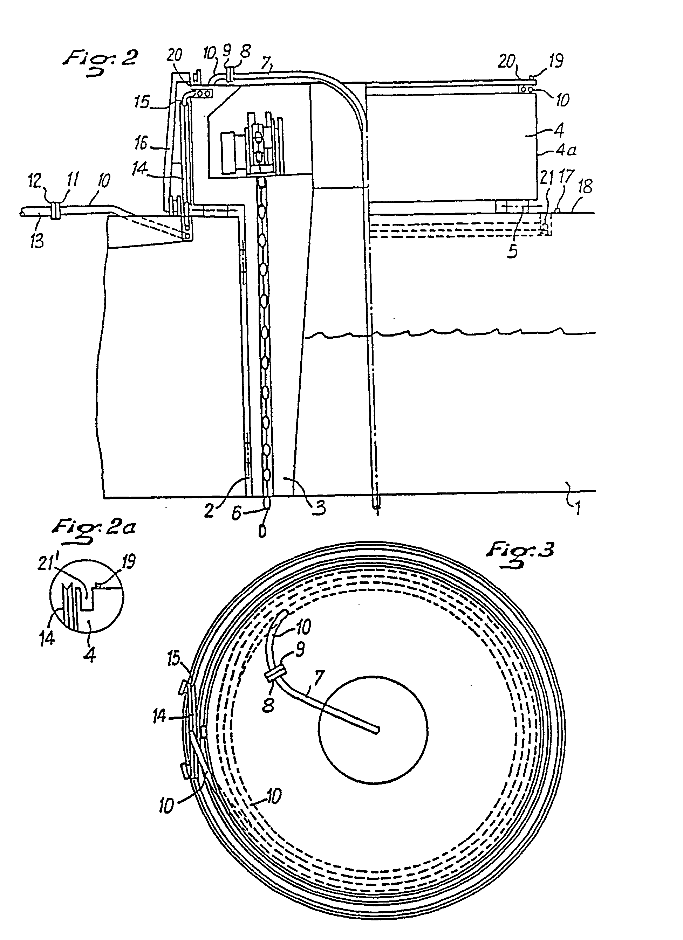

On se réfère maintenant aux figures 2 et 3 qui illustrent un exemple de dispositif selon l'invention.

On y voit une roue 14 comportant une gorge périphérique 15, la roue ayant un axe horizontal et étant montée au voisinage de la paroi latérale 4a de la table supérieure 4 de la tourelle 3. La roue est montée sur un bâti ou portique 16 muni à sa partie inférieure de moyens de roulement sur un rail 17, porté par le pont 18 du navire 1 et, à sa partie supérieure, de moyens de roulement sur un rail 19 porté par la table 4.

Des moyens moteurs non représentés sont prévus pour permettre un déplacement en translation circulaire du bâti 16 et de la roue 14 qu'il porte autour de la table 4. De même des moyens de guidage de conduite, non représentés, sont également prévus sur ce bâti 16.

Pour assurer le stockage de la conduite 10 sur la tourelle, il est prévu à la partie supérieure de la table 4 de celle-ci, une gorge périphérique 20 s'ouvrant radialement vers l'extérieur de la paroi latérale 4a permettant un stockage horizontal de la conduite.

Dans la variante illustrée à la figure 2a, la gorge 20 est remplacée par une gorge 21' s'étendant circonférentiellement à la partie supérieure de la table 4 permettant un stockage vertical de la conduite 10.

Sur le pont du navire il est prévu un puits annulaire 21 pour le stockage vertical du conduit flexible.

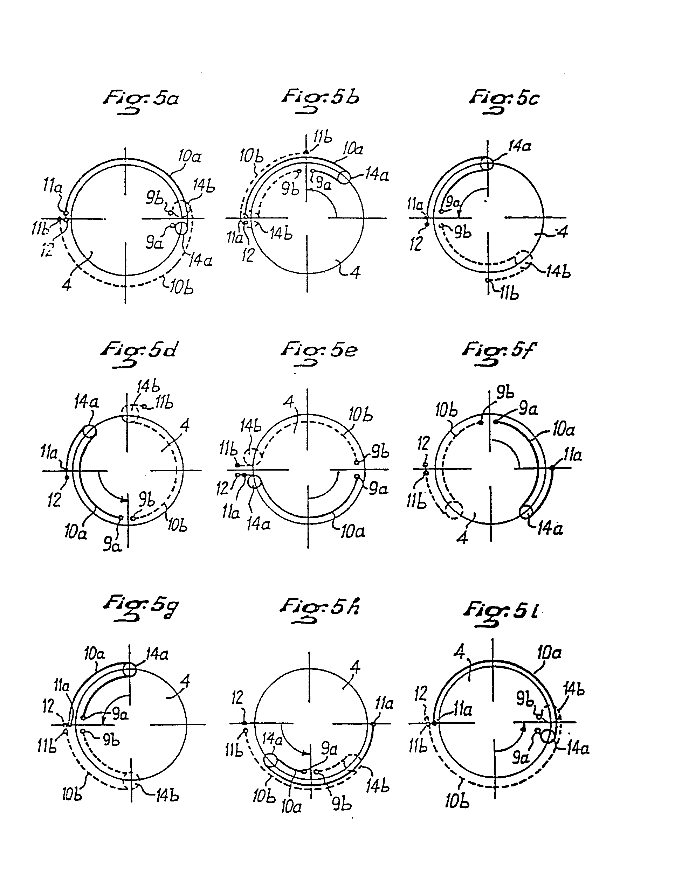

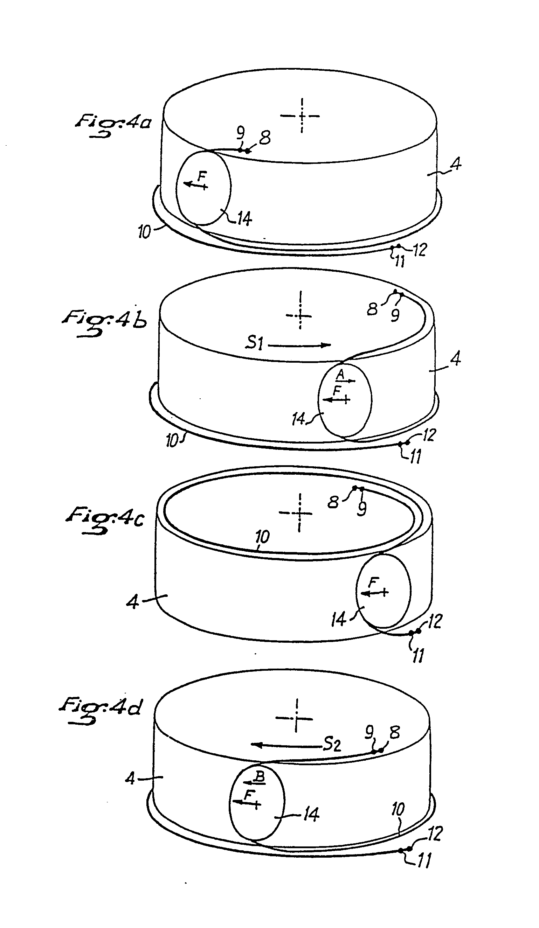

On se réfère maintenant aux figures 4a à 4d qui illustrent très schématiquement différentes positions du dispositif selon l'invention liées à différentes positions relatives du navire 1 constituant la structure mobile par rapport à la structure fixe schématisée par la table supérieure de la tourelle. Les flèches A, B, $S_1$, $S_2$ représentent les mouvements relatifs tels que vus par un observateur placé sur le navire.

Dans la position illustrée à la figure 4a, la conduite tubulaire flexible 10 se trouve entièrement stockée sur le navire.

La figure 4b montre une position intermédiaire dans laquelle la conduite 10 est en cours de destockage de la structure mobile pour être stockée sur la structure fixe lors d'une rotation relative de la structure mobile par rapport à la structure fixe dans le sens matérialisé par la flèche $S_1$.

La roue se déplace dans ce cas dans le sens matérialisé par la flèche A par rapport à la structure fixe 4, les moyens moteurs associés au bâti 16 exerçant sur la roue 14 une action dirigée dans le sens de la flèche F afin d'accroître l'appui de la conduite 10 dans la gorge périphérique dont est munie la roue (14).

La figure 4c illustre la position finale dans laquelle la conduite 10 est entièrement stockée sur la structure fixe 4.

La figure 4d illustre une position intermédiaire liée à une rotation dans le sens $S_2$ de la structure mobile par rapport à la structure fixe à partir de la position de la figure 4c, et dans laquelle la conduite tubulaire 10 est en cours de destockage de la structure fixe et en cours de stockage sur la structure mobile.

La roue se déplace dans le sens de la flèche B autour de la structure fixe.

On comprend que la longueur de la conduite 10 est déterminée en fonction du nombre de tours dans un sens que l'on désire admettre pour la structure mobile par rapport à la structure fixe sans avoir à effectuer d'opération de connexion et de déconnexion des organes de connexion 8, 9 d'une part et 11, 12 d'autre part.

On se réfère maintenant aux figures 5a à 5i qui illustrent un mode de réalisation permettant d'admettre, avec des longueurs de conduites flexibles courtes, un nombre quelconque de rotations dans le même sens de la structure mobile par rapport à la structure fixe, tout en assurant la continuité du transfert de fluide entre la structure fixe et la structure mobile.

Dans ce mode de réalisation, il est prévu deux conduites 10a et 10b pourvues chacune d'éléments de connecteur d'extrémité 9a, 11a, et respectivement 9b, 11b, les éléments de connecteur 9a et 9b restant en permanence connectés avec des éléments de connecteur correspondants, non représentés, solidaires de la structure fixe 4.

Dans ce mode de réalisation, il est prévu une roue 14a, 14b pour chacune des conduites tubulaires 10a 10b.

En début de rotation de la structure mobile par rapport à la structure fixe (Fig. 5a), c'est la conduite 10a qui réalise la liaison, son élément de connecteur 11a étant relié à l'élément de connecteur 12 solidaire du navire ou structure mobile. Pendant les phases de rotation suivantes illustrées dans les figures 5b à 5e, les roues 14a et 14b tourment en enroulant et déroulant respectivement des longueurs de conduites tubulaires jusqu'à la position illustrée dans la figure 5e où la roue 14b portant la conduite 10b est amenée au voisinage de l'élément de connecteur 12 porté par la structure mobile avec l'extrémité de conduite 10b munie de l'élément de connecteur 11b à proximité de l'élément de connecteur 12. A ce moment, par des moyens non illustrés, on raccorde l'élément de connecteur 11b de l'élément de connecteur 12, qui à cet effet présente deux voies de connexion. Pendant le début de la phase de rotation suivant cette opération de connexion on amène le transfert de fluide qui s'effectuait auparavant par la conduite 10a à s'effectuer par la conduite 10b. On déconnecte alors l'élément de connecteur 11a de l'élément de connecteur 12. Lors des phases de rotation ultérieures, les roues 14a et 14b continuant de tourner, on aboutit à la position de la figure 5i dans laquelle on assure la connexion de l'élément de connecteur 11a de la conduite 10a avec l'élément de connecteur 12 puis la déconnexion de l'élément de connecteur 11b de la conduite 10b avec comme décrit précédemment le maintien de la continuité du transfert de fluide.

On se trouve alors ramené à la position de la figure 5a. En variante, on pourrait prévoir que les conduites restent fixées en permanence à la structure mobile, les opérations de connexion et de déconnexion avec continuité du transfert de fluide s'effectuant sur la structure fixe.

**Revendications**

1. Dispositif de transfert de fluide entre une structure fixe au moins en partie cylindrique et une structure mobile en rotation autour de celle-ci, utilisant au moins une conduite flexible munie à chacune de ses extrémités de moyens de connexion aptes à coopérer avec des moyens de connexion correspondants disposés sur la structure fixe et la structure mobile, comprenant des moyens de stockage desdites conduites flexibles sur la structure mobile (21) et sur la structure fixe (20; 21'), caractérisé par le fait que pour guider la ou chacun des conduites (10, 10a, 10b) au cours de leur déplacement de l'un desdits moyens de stockage vers l'autre une portée courbe d'appui (15) est montée guidée sur la structure fixe (3, 4) et/ou la structure mobile (1) de manière à se déplacer concentriquement autou de ladite structure fixe au voisinage de la paroi latérale (4a) de celle-ci.

2. Dispositif selon la revendication 1, caractérisé par le fait que ladite portée courbe d'appui est constituée par une gorge (15) d'une roue (14, 14a, 14b) comportant au moins une gorge périphérique (15).

7

3. Dispositif selon la revendication 1, caractérisé par le fait que ladite portée courbe d'appui est constituée par un chemin de rouleaux.

4. Dispositif selon la revendication 2, caractérisé par le fait que la ou les roues sont montées folles.

5. Dispositif selon l'une quelconque des revendications 2 et 3 caractérisé par le fait que la ou les portées courbes d'appui sont associées à des moyens moteurs d'entraînement agissant sur elles lors de leur déplacement circulaire autour de la structure fixe, l'action des moyens d'entraînement s'effectuant dans un sens permettant d'exercer une tension sur la conduite appliquée sur la portée courbe d'appui correspondante.

6. Dispositif selon l'une quelconque des revendications 2 à 5 caractérisé par le fait que la portée courbe d'appui est montée dans un bâti mobile (16) autour de la structure fixe.

7. Dispositif selon la revendication 6, caractérisé par le fait que ledit bâti (16) est porté et guidé à sa partie inférieure sur un rail (17) porté par la structure mobile et est guidé à sa partie supérieure sur un rail (19) porté par la partie supérieure de la structure fixe.

8. Dispositif selon l'une quelconque des revendications 1 à 7, caractérisé par le fait que les moyens de stockage sur la structure mobile sont constitués par un puits annulaire (21) dans lequel les spires successives de la ou des conduites se disposent les unes au-dessus des autres verticalement.

9. Dispositif selon l'une quelqonque des revendications 1 à 8 caractérisé par le fait que les moyens de stockage sur la structure fixe comportent au moins une gorge (20) s'ouvrant radialement vers l'extérieur de la paroi latérale de la structure fixe au voisinage de sa partie supérieure, les spires étant disposées horizontalement dans la ou lesdites gorges.

10. Dispositif selon l'une quelconque des revendications 1 à 8, caractérisé par le fait que les moyens de stockage sur la structure fixe comprennent une gorge circonférentielle (21') réalisée dans la structure fixe au voisinage de sa périphérie, gorge dans laquelle les spires successives s'engagent les unes au-dessus des autres verticalement.

11. Dispositif selon l'une quelconque des revendications précédentes, caractérisé par le fait qu'il comprend des moyens de guidage de conduites flexibles sur la ou les portées courbes d'appui et le cas échéant sur la structure fixe et/ou la structure mobile.

12. Dispositif selon l'une quelconque des revendications précédentes, caractérisé par le fait qu'il comprend deux conduites (10a, 10b) associées

8

chacune à une portée courbe d'appui (14a, 14b), les deux conduites étant en permanence connectées soit à la structure fixe soit à la structure mobile, chacune des structures comprenant des éléments de connecteur pour le raccordement des éléments de connecteur (9a, 9b, 11a, 11b) portés par les conduites (10a, 10b) la longueur de chaque conduite étant égale ou peu supérieure à une demi-circonférence de ladite structure fixe.

**Patentansprüche**

1. Vorrichtung zum Fluidentransport zwischen einer festen, zumindest teilweise zylindrischen Struktur und einer um diese in Rotation befindlichen Struktur durch wenigstens eine flexible Leitung, die an jedem ihrer Enden mit Anschlußmitteln versehen ist, die mit entsprechenden Anschlußmitteln zusammenwirken, die an der festen und an der drehbaren Struktur angeordnet sind, wobei sich Lagerungsorgane für die flexiblen Leitungen auf der festen Struktur und auf der drehbaren Struktur befinden, dadurch gekennzeichnet, daß um die oder jede der Leitungen (10, 10a, 10b) im Zuge der Verstellung von einem der Lagerungsorgane zu dem anderen zu führen eine gebogene Stützfläche (15) auf der festen Struktur (3, 4) oder auf der drehbaren Struktur (1) geführt montiert ist, daß sie sich konzentrisch um die feste Struktur im Bereich der Seitenwand (4a) derselben verstellt.

2. Vorrichtung nach Anspruch 1, dadurch gekennzeichnet, daß die gebogene Stützfläche aus einer Einkehlung (15) eines Rades (14, 14a, 14b) besteht, welches wenigstens eine umfängliche Einkehlung (15) aufweist.

3. Vorrichtung nach Anspruch 1, dadurch gekennzeichnet, daß die gebogene Stützfläche durch einen Rollenweg gebildet wird.

4. Vorrichtung nach Anspruch 2, dadurch gekennzeichnet, daß das Rad oder die Räder als Leerlaufräder montiert sind.

5. Vorrichtung nach einem der Ansprüche 2 und 3, dadurch gekennzeichnet, daß der gebogenen Stützfläche bzw. den gekrümmten Stützflächen Antriebe zugeordnet sind, welche die kreisförmige Verstellung um die feste Struktur durchführen, wobei die Antriebe in einem solchen Sinne wirken, daß eine Spannung auf die an der zugeordneten Stützfläche anliegenden Leitung ausgeübt wird.

6. Vorrichtung nach einem der vorhergehenden Ansprüche, dadurch gekennzeichnet, daß die gebogene Stützfläche auf einem um die feste Struktur beweglichen Gestell (16) montiert ist.

7. Vorrichtung nach Anspruch 6, dadurch gekennzeichnet, daß das Gestell (16) in seinem unteren Bereich von einer Schiene (17) getragen

5

und geführt wird, die auf der beweglichen Struktur montiert ist, während es in seinem oberen Bereich von einer Schiene (19) geführt ist, die auf dem oberen Teil der festen Struktur getragen wird.

8. Vorrichtung nach einem der Ansprüch 1 bis 7, dadurch gekennzeichnet, daß die Lagerungsorgane auf der drehbaren Struktur durch eine ringförmige Vertiefung (21) gebildet werden, in der die aufeinanderfolgenden Windungen der Leitung bzw. der Leitungen vertikal übereinander gelagert sind.

9. Vorrichtung nach einem der Ansprüche 1 bis 8, dadurch gekennzeichnet, daß die Lagerungsorgane auf der festen Struktur aus wenigstens einer Einkehlung (20) bestehen, die sich in der Seitenwand der festen Struktur in der Nachbarschaft des oberen Bereiches derselben radial nach außen öffnet, wobei die Windungen in der bzw. in den Einkehlungen horizontal verlaufen.

10. Vorrichtung nach einem der Ansprüche 8 und 9, dadurch gekennzeichnet, daß die Lagerungsorgane auf der festen Struktur eine umfängliche Einkehlung (21) bilden, die in der festen Struktur in der Nachbarschaft ihres Umfanges Vorgesehen ist, wobei sich die aufeinanderfolgenden Windungen vertikal übereinander lagern.

11. Vorrichtung nach einem der vorhergehenden Ansprüche, dadurch gekennzeichnet, daß sie Mittel zur Führung der flexiblen Leitungen auf der bzw. den gebogenen Stützflächen und gegebenenfalls auf der festen und/oder der beweglichen Struktur aufweist.

12. Vorrichtung nach einem der vorhergehenden Ansprüche, dadurch gekennzeichnet, daß sie zwei Leitungen (10a, 10b) aufweist, von denen jede einer gebogenen Stützfläche (14a, 14b) zugeordnet ist, daß die beiden Leitungen dauernd entweder an die feste oder die drehbare Struktur angeschlossen sind, daß jede der Strukturen Anschlußelemente für den Anschluß derjenigen Anschlußelemente (9a, 9b, 11a, 11b) aufweist, die sich an den Leitungen (10a, 10b) befinden, wobei die Länge jeder Leitung gleich oder ein wenig großer ist als der Halbumfang der festen Struktur.

**Claims**

1. A device for the transfer of fluid between an at least partially cylindrical fixed structure and a structure movable in rotation round the latter, employing at least one flexible pipe equipped at each end of it with means of connection suitable for cooperating with corresponding means of connection arranged upon the fixed structure and the movable structure, and including means of storage of the said flexible pipes upon the movable structure (21) and upon the fixed structure (20; 21'), characterized by the fact that in order to guide the pipe or each of the pipes (10, 10a, 10b) during the course of their movement from one of the said means of storage towards the other a curved bearing surface (15) is mounted and guided upon the fixed structure (3, 4) and/or the movable structure (1) so as to move concentrically round the said fixed structure in the vicinity of its sidewall (4a).

2. A device as in Claim 1, characterized by the fact that the said curved bearing surface consists of a groove (15) in a wheel (14, 14a, 14b) having at least one peripheral groove (15).

3. A device as in Claim 1, characterized by the fact that the said curved bearing surface consists of a roller train.

4. A device as in Claim 2, characterized by the fact that the wheel or wheels are mounted loose.

5. A device as in either of the Claims 2 and 3, characterized by the fact that the curved bearing surface or surfaces are associated with driving motor means which act upon them at the time of their circular movement round the fixed structure, the action of the driving means being effected in a direction enabling a tension to be exerted upon the pipe applied to the corresponding bearing surface.

6. A device as in any one of the Claims 2 to 5, characterized by the fact that the curved bearing surface is mounted in a frame (16) movable round the fixed structure.

7. A device as in Claim 6, characterized by the fact that the said frame (16) is carried and guided at the lower portion of it on a rail (17) carried by the movable structure and is guided at the upper portion of it on a rail (19) carried by the upper portion of the fixed structure.

8. A device as in any one of the Claims 1 to 7, characterized by the fact that the means of storage on the movable structure consist of an annular well (21) in which the successive turns of the pipe or pipes are disposed one above the other vertically.

9. A device as in any one of the Claims 1 to 8, characterized by the fact that the means of storage on the fixed structure include at least one groove (20) opening out radially towards the outside of the sidewall of the fixed structure in the vicinity of the upper portion of it, the turns being disposed horizontally in the said groove or grooves.

10. A device as in any one of the Claims 1 to 8, characterized by the fact that the means of storage on the fixed structure include a circumferential groove (21') which is formed in the fixed structure in the vicinity of its periphery and in which the successive turns are engaged one above the other vertically.

11

11. A device as in any one of the preceding Claims, characterized by the fact that it includes means of guidance of the flexible pipes onto the curved bearing surface or surfaces and if need be onto the fixed structure and/or the movable structure.

12. A device as in any one of the preceding Claims, characterized by the fact that it includes two pipes (10a, 10b) each associated with a curved bearing surface (14a; 14b), the two pipes being permanently connected either to the fixed structure or to the movable structure and each of the structures including connector members for connection of the connector members (9a, 9b, 11a, 11b) carried by the pipes (10a, 10b), the length of each pipe being equal to or a little greater than a semicircumference of the said fixed structure.

Fig.1

Fig. 2

Fig. 2a

Fig. 3

*Fig.5a*

*Fig.5b*

*Fig.5c*

*Fig.5d*

*Fig.5e*

*Fig.5f*

*Fig.5g*

*Fig.5h*

*Fig.5i*

Fig.4a

9 8

F

4

14

10

11 12

Fig.4b

S1

8 9

A
F

4

14

10

11 12

Fig.4c

8 9

10

4

F

14

12

11

Fig.4d

S2

9 8

4

B
F

14

10

12

11